# EUROPEAN PATENT APPLICATION

(11) **EP 4 574 609 A1**
(43) Date of publication of application: **25.06.2025**
(21) Application number: 24221244.7
(22) Date of filing: 18.12.2024
(51) Int. Cl.: B60W 30/14, B60W 30/16

(54) **DRIVING ASSISTANCE DEVICE, DRIVING ASSISTANCE METHOD, AND DRIVING ASSISTANCE PROGRAM**

(30) Priority: 20.12.2023 JP 2023214509
(71) Applicant: TOYOTA JIDOSHA KABUSHIKI KAISHA, Toyota-shi Aichi 471-8571 (JP)
(72) Inventor: AIKAWA, Hiroki, TOYOTA-SHI, AICHI, 471-8571 (JP)
(74) Representative: Cabinet Beau de Loménie

(57) **Abstract**

The processor controls the drive device and/or the braking device to execute either a mild deceleration process or an acceleration suppression process in the following situations:
In the first specific scene, where the own vehicle (V) and the preceding vehicle (V1) are traveling on the leftmost lane (L) or a left-turn lane of a general road composed of multiple lanes, or on a single-lane general road, and the turn signal of the preceding vehicle (V1) is indicating a left turn, while the preceding vehicle (V1) is not decelerating.
In the second specific scene, where the own vehicle and the preceding vehicle PV are traveling on the rightmost lane or a right-turn lane of a general road composed of multiple lanes, or on a single-lane general road, and the turn signal of the preceding vehicle PV is indicating a right turn, while the preceding vehicle PV is not decelerating.

## Description

### BACKGROUND

The present invention relates to a driving assistance device, driving assistance method, and driving assistance program for assisting a driver's operation of adjusting the speed of an own vehicle.

### DESCRIPTION OF THE RELATED ART

A driving assistance device that assists a driver's operation in adjusting the speed of an own vehicle has been proposed (for example, see Patent Document 1 below). This driving assistance device (hereinafter referred to as the "conventional device") controls the drive device and/or braking device of the own vehicle to decelerate the own vehicle when it detects that a preceding vehicle traveling directly ahead of the own vehicle in the same direction is decelerating (automatic braking).

[Patent Document 1] JP 2006-44590 A

### SUMMARY

Meanwhile, a situation is envisioned where a preceding vehicle makes a left (right) turn, and the preceding vehicle is driving at a constant speed with its turn signal indicating a left (right) turn, and then begins to decelerate and initiate the left (right) turn. In this situation, during the period when the preceding vehicle is traveling at a constant speed, the conventional device does not perform automatic braking. The conventional device performs automatic braking when it detects that the preceding vehicle has started to decelerate. Thus, when using the conventional device, the timing for starting automatic braking (the timing when the own vehicle begins to decelerate) is relatively late. If the driver and passengers (occupants) of the own vehicle recognize that the turn signal of the preceding vehicle is activated, the occupants are likely to anticipate that the preceding vehicle will decelerate later. In such a situation, there is a possibility that the occupants may feel anxious if the own vehicle continues to travel without decelerating. Additionally, during this period, the distance between the own vehicle and the preceding vehicle may decrease, leading to a potential situation where the own vehicle and the preceding vehicle are in close proximity. In this case, the occupants of the own vehicle may feel anxious.

One of the objectives of the present invention is to provide a driving assistance device that can improve the comfort of the occupants of the own vehicle in situations where the preceding vehicle is making a left or right turn.

To solve the above issues, the driving assistance device of the present invention comprises:
- An in-vehicle sensor that acquires information related to the own vehicle and information related to a preceding vehicle traveling ahead of the own vehicle; and
- A processor capable of executing a speed adjustment process by controlling the drive device and/or braking device of the own vehicle based on the information related to the own vehicle and/or the information related to the preceding vehicle, to adjust the speed of the own vehicle.

The processor is configured to:
- In a first specific scene, where the own vehicle and the preceding vehicle are traveling on the leftmost lane or a left-turn lane of a general road composed of multiple lanes, or on a single-lane general road, and the turn signal of the preceding vehicle is indicating a left turn, and the preceding vehicle is not decelerating; and
- In a second specific scene, where the own vehicle and the preceding vehicle are traveling on the rightmost lane or a right-turn lane of a general road composed of multiple lanes, or on a single-lane general road, and the turn signal of the preceding vehicle is indicating a right turn, and the preceding vehicle is not decelerating,

Execute, as the speed adjustment process:
- A mild deceleration process that controls the drive device and/or braking device to decelerate the own vehicle at a predetermined deceleration rate; or
- An acceleration suppression process that controls the drive device and/or braking device to suppress the acceleration of the own vehicle.

The driving assistance method according to the present invention includes:
an information acquisition step for acquiring information related to an own vehicle and information related to a preceding vehicle traveling ahead of the own vehicle; and
a speed adjustment step for adjusting the speed of the own vehicle by controlling the drive device and/or braking device of the own vehicle based on the information related to the own vehicle and/or the information related to the preceding vehicle.

The speed adjustment step includes:
- In a first specific scene, where the own vehicle and the preceding vehicle are traveling on the leftmost lane or a left-turn lane of a general road composed of multiple lanes, or on a single-lane general road, and the turn signal of the preceding vehicle indicates a left turn, and the preceding vehicle is not decelerating; and
- In a second specific scene, where the own vehicle and the preceding vehicle are traveling on the rightmost lane or a right-turn lane of a general road composed of multiple lanes, or on a single-lane general road, and the turn signal of the preceding vehicle indicates a right turn, and the preceding vehicle is not decelerating,
execute, as the speed adjustment process:
- A mild deceleration process that controls the drive device and/or braking device to decelerate the own vehicle at a predetermined deceleration rate; or
- An acceleration suppression process that controls the drive device and/or braking device to suppress the acceleration of the own vehicle.

The driving assistance program according to the present invention causes a computer provided in the own vehicle to execute:
an information acquisition step for acquiring information related to the own vehicle and information related to a preceding vehicle traveling ahead of the own vehicle; and
a speed adjustment step for adjusting the speed of the own vehicle by controlling the drive device and/or braking device of the own vehicle based on the information related to the own vehicle and/or the information related to the preceding vehicle.

The speed adjustment step includes:
- In a first specific scene, where the own vehicle and the preceding vehicle are traveling on the leftmost lane or a left-turn lane of a general road composed of multiple lanes, or on a single-lane general road, and the turn signal of the preceding vehicle indicates a left turn, and the preceding vehicle is not decelerating; and
- In a second specific scene, where the own vehicle and the preceding vehicle are traveling on the rightmost lane or a right-turn lane of a general road composed of multiple lanes, or on a single-lane general road, and the turn signal of the preceding vehicle indicates a right turn, and the preceding vehicle is not decelerating,
execute, as the speed adjustment process:
- A mild deceleration process that controls the drive device and/or braking device to decelerate the own vehicle at a predetermined deceleration rate; or
- An acceleration suppression process that controls the drive device and/or braking device to suppress the acceleration of the own vehicle.

In the first and second specific scenes, although the preceding vehicle is not decelerating, there is a high likelihood that the preceding vehicle will begin to decelerate later. Therefore, the processor executes the mild deceleration process or the acceleration suppression process in the first and second specific scenes. If the processor executes the mild deceleration process, the distance between the own vehicle and the preceding vehicle increases. If the processor executes the acceleration suppression process, the reduction in the distance between the own vehicle and the preceding vehicle is suppressed. In other words, according to the present invention, the distance between the own vehicle and the preceding vehicle can be relatively well maintained in these specific scenes. As a result, the likelihood of causing anxiety for the occupants is reduced. Additionally, if the preceding vehicle starts to decelerate later, the own vehicle can decelerate with sufficient margin. In other words, the deceleration (rearward acceleration) of the own vehicle is smaller. Thus, compared to using the conventional device, the present invention can improve the comfort of the own vehicle's occupants.

In the driving assistance device according to one embodiment of the present invention, the processor terminates the execution of the mild deceleration process or the acceleration suppression process at a second point in time when a predetermined time has elapsed from a first point in time when the execution of the mild deceleration process or the acceleration suppression process began in the first specific scene and the second specific scene.

In cases where the preceding vehicle is traveling at a constant speed or accelerating for a relatively long time in the first or second specific scene, the distance between the own vehicle and the preceding vehicle may become excessively large. According to this embodiment, since the upper limit of the time for executing the mild deceleration process or the acceleration suppression process is specified, the excessive increase in the distance between the own vehicle and the preceding vehicle is prevented.

In another embodiment of the driving assistance device according to the present invention, the processor executes a following process in scenes other than the first specific scene and the second specific scene, as the speed adjustment process, to adjust the speed of the own vehicle so that the distance between the own vehicle and the preceding vehicle matches a target value determined based on the speeds of the own vehicle and the preceding vehicle.

If the preceding vehicle begins to decelerate in the first or second specific scene, and as a result, the distance between the own vehicle and the preceding vehicle becomes smaller than the target value, the processor controls the drive device and/or the braking device to decelerate the own vehicle. That is, the own vehicle is automatically braked. In the first and second specific scenes, since the distance between the own vehicle and the preceding vehicle is relatively well maintained, the own vehicle can be decelerated with ample margin in such automatic braking. In other words, the deceleration (backward acceleration) of the own vehicle is small. This helps prevent the comfort of the occupants in the own vehicle from being compromised.

### BRIEF DESCRIPTION OF THE DRAWINGS

FIG. 1 is a block diagram of the driving assistance device according to one embodiment of the present invention.
FIG. 2A is a plan view showing the first example of specific scenes.
FIG. 2B is a plan view showing the second example of specific scenes.
FIG. 3A is a plan view showing the third example of specific scenes.
FIG. 3B is a plan view showing the fourth example of specific scenes.
FIG. 4A is a plan view showing the fifth example of specific scenes.
FIG. 4B is a plan view showing the sixth example of specific scenes.
FIG. 5A is a plan view showing the seventh example of specific scenes.
FIG. 5B is a plan view showing the eighth example of specific scenes.
FIG. 6 is a flowchart of the first program executed by the CPU to realize the mild deceleration function.
FIG. 7 is a flowchart of the second program executed by the CPU to realize the mild deceleration function.

### DESCRIPTION OF THE EMBODIMENTS

### (Overview)

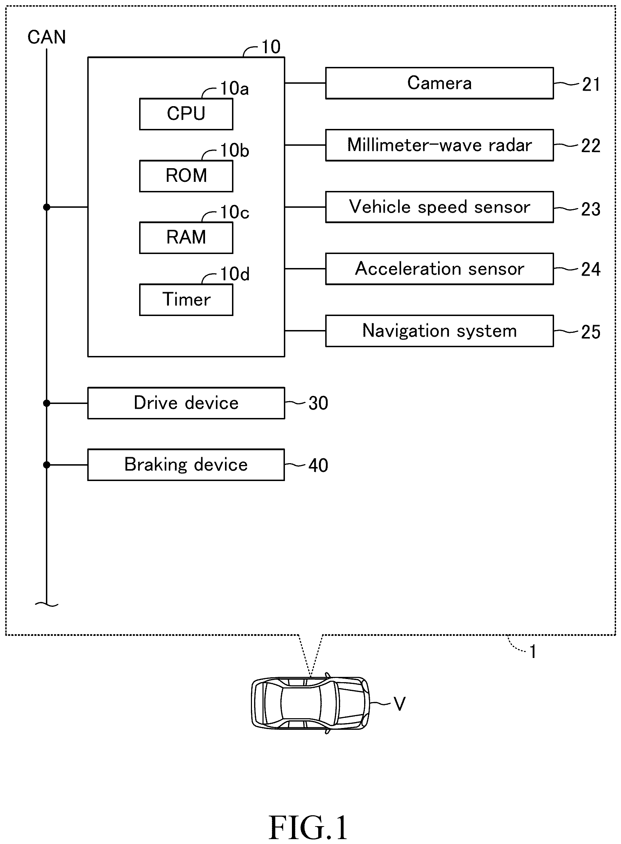

As shown in FIG. 1, the driving assistance device 1 according to one embodiment of the present invention is applied to a vehicle V (hereinafter referred to as the "own vehicle") equipped with an autonomous driving function. The driving assistance device 1 has a speed adjustment function that supports the driver's operation in adjusting the speed of the own vehicle when the autonomous driving function is disabled.

### (Specific Configuration)

As shown in FIG. 1, the driving assistance device 1 comprises an ECU 10, an in-vehicle sensor 20, a drive device 30, and a braking device 40.

The ECU 10 includes a microcomputer equipped with a CPU 10a, ROM 10b (rewritable non-volatile memory), RAM 10c, and a timer 10d. The CPU executes various functions by running programs (instructions) stored in the ROM. The ECU 10 is connected to other ECUs via a Controller Area Network (CAN).

The in-vehicle sensor 20 includes a camera 21 and a millimeter-wave radar 22, both of which are used to acquire information about the preceding vehicle V1 located ahead of the own vehicle.

The camera 21 includes an imaging device and an image analysis device. The imaging device is, for example, equipped with a built-in CCD. It is installed at the front of the own vehicle and oriented towards the front of the vehicle. The imaging device captures the area in front of the own vehicle at a predetermined frame rate to obtain image data. The image analysis device acquires the image data from the imaging device and analyzes it to recognize objects (targets) present within the field of view. The image analysis device recognizes, for example, lane markings (lane boundaries), road signs (such as those indicating left-turn or right-turn lanes), and identifies the preceding vehicle V1 positioned directly ahead of the own vehicle in its lane. Furthermore, the image analysis device recognizes the operating state of the turn signal (turn indicator) of the preceding vehicle V1, such as whether the turn signal is on. The recognition results are provided to the ECU 10.

The millimeter-wave radar 22 includes a transmission/reception unit and a signal processing unit. The transmission/reception unit emits millimeter-wave band radio waves (hereinafter referred to as "millimeter waves") into the surrounding area in front of the own vehicle and receives reflected millimeter waves (echo waves) from objects in the area. The signal processing unit acquires various information about the reflection points of the millimeter waves based on physical quantities such as the time it takes for the echo wave to return, the attenuation level of the echo wave, and the frequency difference between the emitted and received millimeter waves. For example, the signal processing unit calculates the position (relative direction and distance) of each reflection point relative to the transmission/reception unit. It also calculates the velocity (relative speed) of each reflection point relative to the own vehicle. The results of these calculations (data showing the distribution of reflection points, such as their positions and velocities relative to the own vehicle) are provided to the ECU 10.

Here, the field of view of the camera 21 (the range that can be imaged) overlaps with the field of view of the millimeter-wave radar 22 (the area where millimeter waves are emitted). The ECU 10 can acquire information about objects ahead of the own vehicle, including the position (relative position) and speed (relative velocity) of objects relative to the own vehicle, based on fusion information that integrates data obtained from the camera 21 and the millimeter-wave radar 22.

The in-vehicle sensor 20 also includes a vehicle speed sensor 23 and an acceleration sensor 24, which are used to acquire information about the behavior of the own vehicle.

The vehicle speed sensor 23 includes a rotational speed measurement circuit and a speed calculation device. The rotational speed measurement circuit comprises a pulse generation circuit that outputs pulses (electrical signals) every time the vehicle's wheels rotate by a certain angle and a counter circuit that counts the number of pulses. The speed calculation device acquires the output value of the counter circuit (pulse count) at predetermined intervals (e.g., every unit time) and resets the count value to zero. In this way, the speed calculation device obtains the rotational speed N of the wheels per unit time. By multiplying the rotational speed N by a coefficient k, the speed calculation device obtains the speed vs (the absolute value of the forward speed) of the own vehicle. The speed calculation device provides the obtained speed vs to the ECU 10. Based on the information acquired from the camera 21 and the millimeter-wave radar 22, the ECU 10 calculates the relative speed vr between the own vehicle and the preceding vehicle V1. The ECU 10 also obtains the vehicle's speed vs (speed relative to the road) from the vehicle speed sensor 23. Based on the relative speed vr and the vehicle speed vs, the ECU 10 can calculate the speed vs1 of the preceding vehicle V1 relative to the road (vs1 = vr + vs).

The acceleration sensor 24 includes a piezoelectric element. When the own vehicle accelerates or decelerates in the forward or backward direction, the piezoelectric element deforms accordingly, causing the output voltage of the piezoelectric element to change. The acceleration sensor 24 measures the acceleration of the own vehicle in the forward and backward directions based on the output voltage of the piezoelectric element and provides this acceleration data to the ECU 10.

The in-vehicle sensor 20 also includes a navigation system 25, which acts as a sensor for acquiring information about the road on which the own vehicle and the preceding vehicle V1 are traveling. The navigation system 25 determines the position (latitude and longitude) of the own vehicle based on GPS signals and stores map information. The map information includes data on the type of road (general road or highway) and lane information (e.g., number of lanes, left-turn lanes, right-turn lanes). The navigation system 25 provides information on the type of road and lane the own vehicle is traveling on, based on its position and the map data, to the ECU 10.

The drive device 30 generates driving force and applies this force to the drive wheels (left front wheel, right front wheel, left rear wheel, and right rear wheel) of the vehicle. The drive device 30 includes an engine ECU, an internal combustion engine, and a transmission. The engine ECU receives the target driving force value from the ECU 10 and controls the throttle valve of the internal combustion engine (the opening of the solenoid valve) to ensure that the driving force applied to the drive wheels matches the target value. The output (driving force) of the internal combustion engine is transmitted to the drive wheels through the transmission and the drive force transmission mechanism (e.g., drive shaft).

If the own vehicle is a hybrid electric vehicle (HEV), the engine ECU adjusts the driving force generated by either or both of the "internal combustion engine and electric motor" to match the target value. If the own vehicle is a battery electric vehicle (BEV), the engine ECU is replaced with a motor ECU, which adjusts the driving force generated by the electric motor to match the target value.

The braking device 40 applies braking force to the wheels. The braking device 40 includes a brake ECU, a hydraulic circuit, and brake calipers. The hydraulic circuit includes components such as a reservoir (not shown), an oil pump, various valve devices, and a hydraulic sensor. The brake caliper is a hydraulic actuator with a cylinder and piston. When oil is supplied to the cylinder, the piston is pushed out. The brake pad is attached to the tip of the piston, and it presses against the brake disc to create braking force. The brake ECU receives the target braking force value from the ECU 10 and controls the hydraulic circuit to ensure that the braking force applied to the wheels matches the target value.

### (Speed Adjustment Function)

When the ECU 10 determines that a preceding vehicle V1 is present, it performs a following process to control the drive device 30 and/or braking device 40 (hereinafter referred to as "drive devices, etc.") to ensure that the distance (D) between the own vehicle and the preceding vehicle V1 matches a target value (Dd), and that the speed (vs) of the own vehicle follows the speed (vs1) of the preceding vehicle V1. This function is referred to as the "following function." However, under certain conditions, the ECU 10 will execute a mild deceleration process, controlling the drive devices, etc., to gently decelerate the own vehicle instead of performing the following process. This function is referred to as the "mild deceleration function."

### (Following Function)

The ECU 10 sequentially acquires the distance (D) between the own vehicle and the preceding vehicle V1, as well as the relative speed (vr) based on information obtained from the camera 21 and the millimeter-wave radar 22. Additionally, the ECU 10 sequentially acquires the speed (vs) of the own vehicle from the vehicle speed sensor 23. Based on the relative speed vr and the speed vs (the speed relative to the road surface), the ECU 10 calculates the speed (vs1) of the preceding vehicle V1 relative to the road. The ECU 10 determines the target distance (Dd) between the own vehicle and the preceding vehicle based on the speed vs of the own vehicle and the speed vs1 of the preceding vehicle.

If the relative speed vr is greater than "0", the distance (D) between the own vehicle and the preceding vehicle increases. When the distance D is greater than the target distance Dd, the ECU 10 sets the target acceleration (α) of the own vehicle to a predetermined value α1 (> 0) so that the speed vs of the own vehicle becomes greater than the speed vs1 of the preceding vehicle. The ECU 10 then controls the drive devices, etc., so that the actual acceleration (α) of the own vehicle matches the predetermined value α1 (acceleration process). This reduces the distance D, bringing it closer to the target distance Dd. Once the distance D matches the target distance Dd, the ECU 10 sets the target acceleration (α) to "0" and controls the drive devices, etc., so that the own vehicle travels at the same speed as the preceding vehicle V1.

On the other hand, if the relative speed vr is less than "0", the distance (D) between the own vehicle and the preceding vehicle decreases. When the distance D is smaller than the target distance Dd, the ECU 10 sets the target deceleration (β) of the own vehicle to a predetermined value β1 so that the speed vs of the own vehicle becomes smaller than the speed vs1 of the preceding vehicle. Deceleration (β) corresponds to the reduction rate of the forward speed of the own vehicle. The ECU 10 controls the drive devices, etc., so that the actual deceleration (β) of the own vehicle matches the predetermined value β1 (deceleration process). This increases the distance D, bringing it closer to the target distance Dd. Once the distance D matches the target distance Dd, the ECU 10 sets the target deceleration (β) to "0" and controls the drive devices, etc., so that the own vehicle travels at the same speed as the preceding vehicle V1.

The target distance Dd is correlated with the speed vs of the own vehicle and the speed vs1 of the preceding vehicle. For example, when the speeds vs and vs1 are relatively low, the target distance Dd is smaller than when the speeds vs and vs1 are relatively high. A database (table) or parameters defining a formula for calculating the target distance Dd based on the relationship between the speeds vs, vs1, and the target distance Dd is stored in the ROM 10b. The ECU 10 determines the target distance Dd based on this database or formula.

### (Mild Deceleration Function)

The ECU 10 sequentially determines whether the following conditions X1 or X2 are satisfied based on the information obtained from the in-vehicle sensor 20:

### [Condition X1]

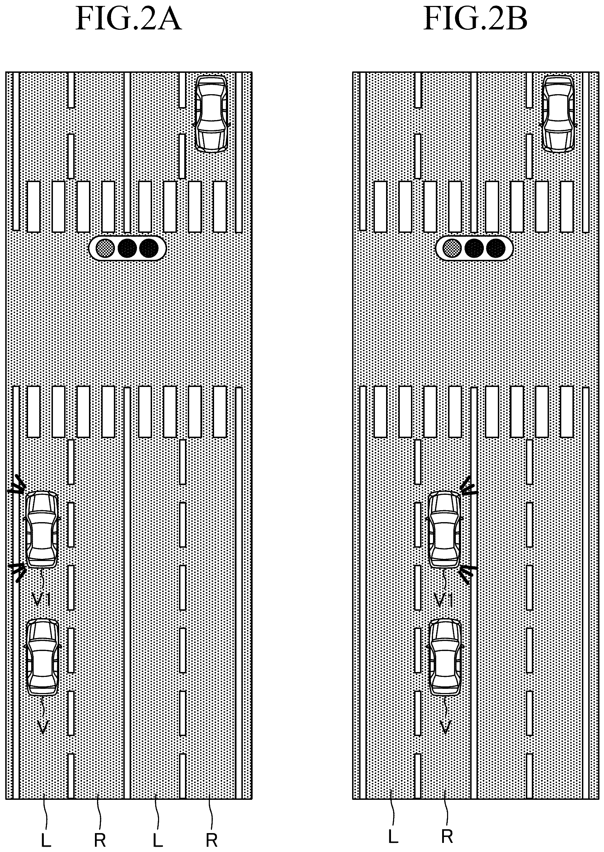

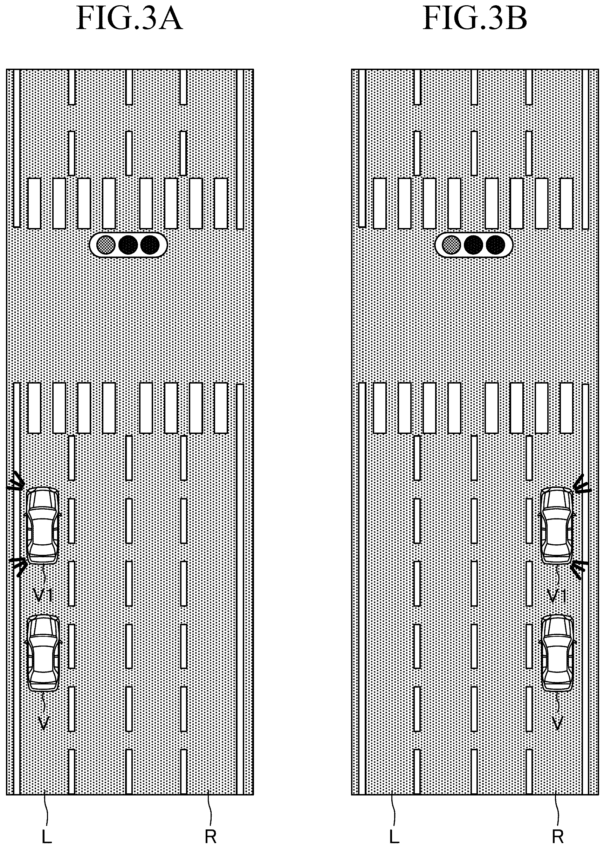

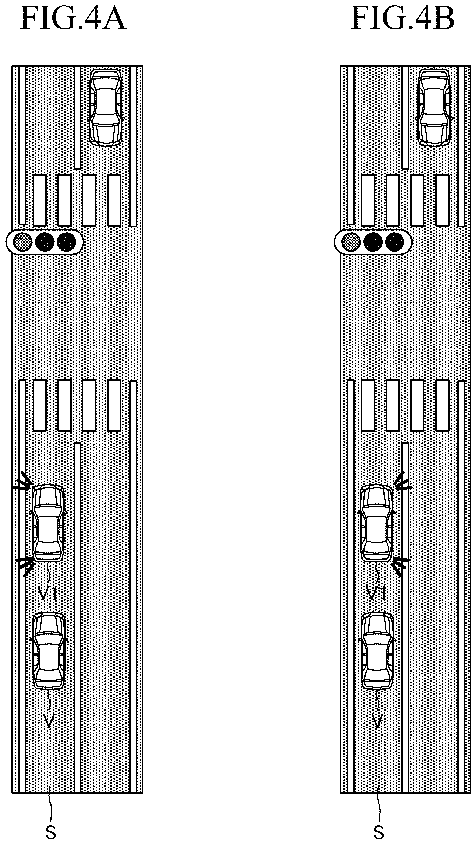

The own vehicle and the preceding vehicle V1 are traveling in the leftmost lane (L) of a general road composed of multiple lanes or in a single-lane (S) general road, the turn signal of the preceding vehicle V1 is indicating a left turn (the left turn signal is flashing), and the preceding vehicle V1 is not decelerating (see FIG. 2A, FIG. 3A, and FIG. 4A).

### [Condition X2]

The own vehicle and the preceding vehicle V1 are traveling in the rightmost lane (R) of a general road composed of multiple lanes or in a single-lane (S) general road, the turn signal of the preceding vehicle V1 is indicating a right turn (the right turn signal is flashing), and the preceding vehicle V1 is not decelerating (see FIG. 2B, FIG. 3B, and FIG. 4B).

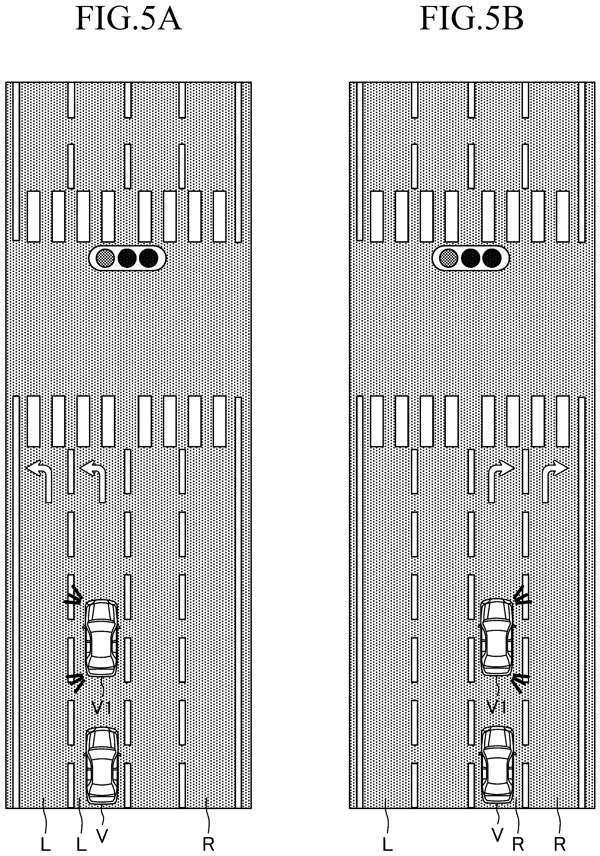

As shown in FIG. 5A, the ECU 10 recognizes the left-turn lane (a lane designated for left turns at an intersection or a lane that allows left turns) as the leftmost lane (L) on a road composed of multiple lanes. Similarly, as shown in FIG. 5B, the ECU 10 recognizes the right-turn lane (a lane designated for right turns at an intersection or a lane that allows right turns) as the rightmost lane (R) on a road composed of multiple lanes.

In the first specific scene (SCN1), where condition X1 is satisfied, and in the second specific scene (SCN2), where condition X2 is satisfied, the ECU 10 executes the mild deceleration process instead of the following process. Specifically, in SCN1 and SCN2, the ECU 10 controls the drive devices, etc., to ensure that the deceleration (β) of the own vehicle, which is a relatively small target value (βd < β1), matches the target. In SCN1 and SCN2, the preceding vehicle V1 is not decelerating (either traveling at a constant speed or accelerating), and the own vehicle is gently decelerated. As a result, the distance (D) between the own vehicle and the preceding vehicle increases, but this increase in distance is allowed in SCN1 and SCN2.

The ECU 10 measures the elapsed time (Δt) from the point in time (t1) when the mild deceleration process was initiated. When the elapsed time (Δt) reaches a threshold value (Δt_th) at time (t2), the ECU 10 ends the mild deceleration process and resumes the following process. The threshold value (Δt_th) is a predetermined time, calculated as the standard time between the activation of the preceding vehicle's turn signal and the point when the preceding vehicle begins to decelerate. However, if the ECU 10 detects that the preceding vehicle V1 has begun decelerating while the mild deceleration process is being executed, it ends the mild deceleration process at that point and resumes the following process. Even if the turn signal of the preceding vehicle V1 stops functioning while the mild deceleration process is being executed, the ECU 10 will continue the mild deceleration process until time t2. However, the ECU 10 may also end the mild deceleration process and resume the following process when the turn signal stops functioning.

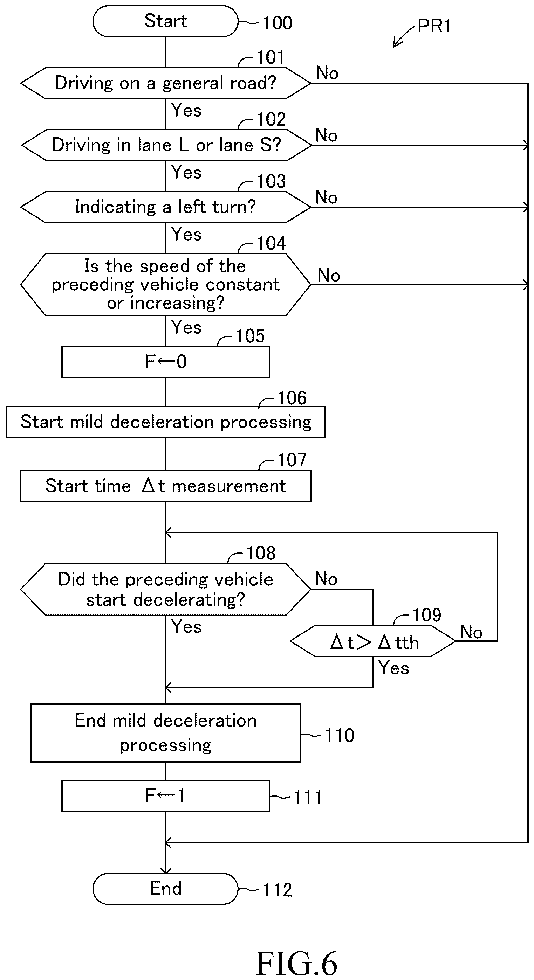

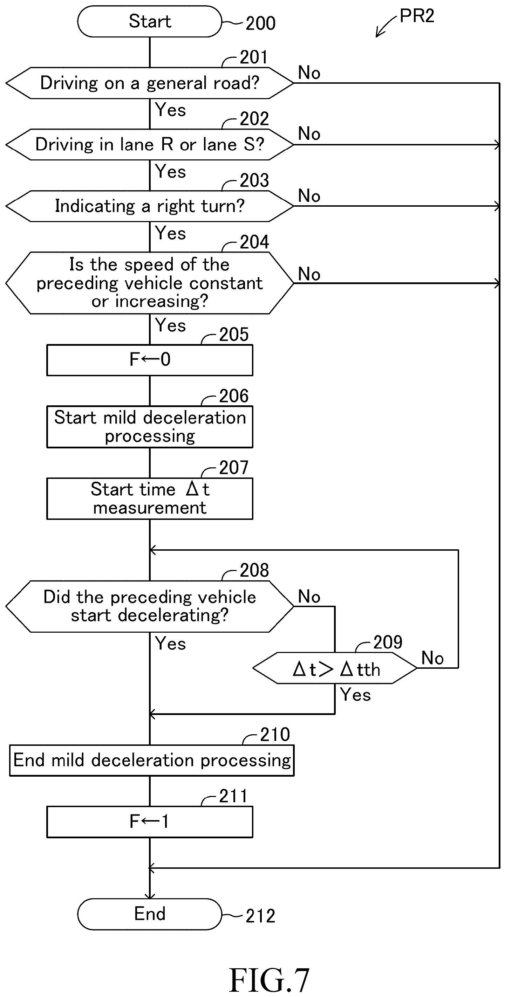

Next, referring to FIG. 6 and FIG. 7, the programs PR1 and PR2, executed by the ECU 10's CPU 10a (hereinafter referred to as "CPU"), to realize the above mild deceleration function will be explained. In programs PR1 and PR2, a flag (F) is used. The flag F indicates whether the execution of the following process (acceleration process and deceleration process) is allowed. When the execution of the acceleration process and deceleration process is allowed, the flag F is set to "1." When the execution of the acceleration and deceleration processes is prohibited, the flag F is set to "0." When the ignition switch of the own vehicle transitions from the off state to the on state, the flag F is initialized to "1."

When the ignition switch is in the on state, the CPU starts executing programs PR1 and PR2 at predetermined intervals.

### (Program PR1)

The CPU starts executing program PR1 from step 100 and proceeds to step 101.

In step 101, the CPU determines whether the own vehicle is traveling on a general road based on information obtained from the navigation system 25. If the CPU determines that the own vehicle is traveling on a general road (101: Yes), it proceeds to step 102. If the CPU determines that the own vehicle is not traveling on a general road (101: No), it proceeds to step 112, where the execution of program PR1 is terminated.

In step 102, the CPU determines whether the own vehicle is traveling in lane L or lane S based on information obtained from the navigation system 25. If the CPU determines that the own vehicle is traveling in lane L or lane S (102: Yes), it proceeds to step 103. If the CPU determines that the own vehicle is not traveling in lane L or lane S (102: No), it proceeds to step 112, where the execution of program PR1 is terminated.

In step 103, the CPU determines whether the turn signal of the preceding vehicle V1 is indicating a left turn (i.e., whether the left turn indicator is flashing) based on information obtained from the camera 21. If the CPU determines that the turn signal of the preceding vehicle V1 is indicating a left turn (103: Yes), it proceeds to step 104. If the CPU determines that the turn signal of the preceding vehicle V1 is not indicating a left turn (103: No), it proceeds to step 112, where the execution of program PR1 is terminated.

In step 104, the CPU acquires the speed (vs1) of the preceding vehicle V1 based on information obtained from the camera 21, the millimeter-wave radar 22, and the vehicle speed sensor 23. The CPU then determines whether the speed (vs1) of the preceding vehicle V1 is constant or increasing, based on the time-series data of speed vs1. If the CPU determines that the speed (vs1) of the preceding vehicle is constant or increasing (104: Yes), it proceeds to step 105. If the CPU determines that the speed (vs1) is not constant or increasing (104: No), it proceeds to step 112, where the execution of program PR1 is terminated.

In step 105, the CPU sets the flag F to "0," meaning that the following process (acceleration and deceleration) is interrupted, and the execution of acceleration and deceleration processes is prohibited. The CPU then proceeds to step 106.

In step 106, the CPU initiates the mild deceleration process. The CPU then proceeds to step 107.

In step 107, the CPU starts measuring the elapsed time (Δt) from the initiation of the mild deceleration process using the timer 10d. The CPU then proceeds to step 108.

In step 108, the CPU acquires the speed (vs1) of the preceding vehicle V1 based on information obtained from the millimeter-wave radar 22 and the vehicle speed sensor 23. The CPU then determines whether the speed (vs1) of the preceding vehicle V1 is decreasing, based on the time-series data of speed vs1 (i.e., whether the preceding vehicle V1 has started to decelerate). If the CPU determines that the speed (vs1) is decreasing (108: Yes), it proceeds to step 110. If the CPU determines that the speed (vs1) is not decreasing (108: No), it proceeds to step 109.

In step 109, the CPU determines whether the elapsed time (Δt) has exceeded the threshold value (Δt_th). If the CPU determines that the elapsed time (Δt) has exceeded the threshold value (109: Yes), it proceeds to step 110. If the CPU determines that the elapsed time (Δt) has not exceeded the threshold value (109: No), it returns to step 108 to continue the mild deceleration process.

In step 110, the CPU terminates the mild deceleration process and proceeds to step 111.

In step 111, the CPU sets the flag F to "1," meaning that the following process (acceleration and deceleration) is resumed, and the execution of acceleration and deceleration processes is allowed. The CPU then proceeds to step 112, where the execution of program PR1 is terminated.

### (Program PR2)

The CPU starts executing program PR2 from step 200 and proceeds to step 201.

In step 201, the CPU determines whether the own vehicle is traveling on a general road based on information obtained from the navigation system 25. If the CPU determines that the own vehicle is traveling on a general road (201: Yes), it proceeds to step 202. If the CPU determines that the own vehicle is not traveling on a general road (201: No), it proceeds to step 212, where the execution of program PR2 is terminated.

In step 202, the CPU determines whether the own vehicle is traveling in lane R or lane S based on information obtained from the navigation system 25. If the CPU determines that the own vehicle is traveling in lane R or lane S (202: Yes), it proceeds to step 203. If the CPU determines that the own vehicle is not traveling in lane R or lane S (202: No), it proceeds to step 212, where the execution of program PR2 is terminated.

In step 203, the CPU determines whether the turn signal of the preceding vehicle V1 is indicating a right turn (i.e., whether the right turn indicator is flashing) based on information obtained from the camera 21. If the CPU determines that the turn signal of the preceding vehicle V1 is indicating a right turn (203: Yes), it proceeds to step 204. If the CPU determines that the turn signal of the preceding vehicle V1 is not indicating a right turn (203: No), it proceeds to step 212, where the execution of program PR2 is terminated.

Steps 204 through 212 are identical to steps 104 through 112 of program PR1, so their explanation is omitted.

Note that when the flag F is set to "1," the CPU executes an unseen program to realize the following function. This program includes a step to determine the target distance Dd based on the speeds vs and vs1, and either an acceleration process to make the actual distance D match the target distance Dd or a deceleration process if necessary.

### (Effect)

In the first specific scene (SCN1) and the second specific scene (SCN2), the preceding vehicle V1 is not decelerating, but there is a high probability that it will begin to decelerate later. Therefore, the ECU 10 executes the mild deceleration process in SCN1 and SCN2. As a result, the distance D between the own vehicle and the preceding vehicle increases. In other words, the distance D can be relatively large in these scenes, reducing the likelihood of causing anxiety for the occupants. Additionally, if the preceding vehicle V1 starts decelerating later, the own vehicle can decelerate with sufficient margin. As described above, this embodiment improves the comfort of the own vehicle's occupants compared to conventional systems.

The present invention is not limited to the above embodiment and can be modified in various ways within the scope of the invention as described below.

### <Modification Example 1>

Instead of the mild deceleration process in the above embodiment, the ECU 10 may execute an acceleration suppression process that controls the drive device 30 and/or the braking device 40 to prevent the own vehicle from accelerating (increasing the speed vs). For example, even if the driver presses the accelerator pedal in SCN1 or SCN2, the ECU 10 will not increase the target driving force.

### <Modification Example 2>

In the above embodiment, the ECU 10 can execute both the acceleration process and deceleration process during the following process. However, as a modification, the ECU 10 may be configured to execute only the deceleration process during the following process. In other words, in scenes other than SCN1 and SCN2, it may be permissible for the distance D to increase beyond the target distance Dd.

## Claims

1. A driving assistance device (1) comprising:
an in-vehicle sensor (20) configured to acquire information related to an own vehicle (V) and information related to a preceding vehicle (V1) traveling ahead of the own vehicle; and
a processor (10) capable of executing a speed adjustment process by controlling a drive device (30) and/or a braking device (40) of the own vehicle based on the information related to the own vehicle (V) and/or the information related to the preceding vehicle (V1) to adjust the speed of the own vehicle (V),
wherein the processor is configured to:
in a first specific scene (SCN1), where the own vehicle (V) and the preceding vehicle (V1) are traveling on the leftmost lane (L) or a left-turn lane (L) of a general road composed of multiple lanes, or on a single-lane (S) general road, where the turn signal of the preceding vehicle (V1) indicates a left turn and the preceding vehicle (V1) is not decelerating; and
in a second specific scene (SCN2), where the own vehicle and the preceding vehicle are traveling on the rightmost lane (R) or a right-turn lane (R) of a general road composed of multiple lanes, or on a single-lane (S) general road, where the turn signal of the preceding vehicle (V1) indicates a right turn and the preceding vehicle (V1) is not decelerating,
execute, as the speed adjustment process:
a mild deceleration process that controls the drive device (30) and/or the braking device (40) so that the own vehicle (V) decelerates at a predetermined deceleration rate; or
an acceleration suppression process that controls the drive device (30) and/or the braking device (40) so that the acceleration of the own vehicle (V) is suppressed.

2. The driving assistance device according to claim 1,
wherein the processor is configured to, in the first specific scene (SCN1) and the second specific scene (SCN2), terminate the execution of the acceleration suppression process or the mild deceleration process at a second point in time when a predetermined time (Δt_th) has elapsed from a first point in time at which the execution of the acceleration suppression process or the mild deceleration process began.

3. The driving assistance device according to claim 1 or claim 2,
wherein the processor is configured to execute, as the speed adjustment process in scenes other than the first specific scene (SCN1) and the second specific scene (SCN2), a following process that adjusts the speed of the own vehicle (V) so that the distance between the own vehicle (V) and the preceding vehicle (V1) matches a target value determined based on the speeds (vs, vs1) of the own vehicle (V) and the preceding vehicle (V1).

4. A driving assistance method comprising:
an information acquisition step of acquiring information related to an own vehicle (V) and information related to a preceding vehicle (V1) traveling ahead of the own vehicle; and
a speed adjustment step of adjusting the speed of the own vehicle (V) by controlling a drive device (30) and/or a braking device (40) of the own vehicle (V) based on the information related to the own vehicle (V) and/or the information related to the preceding vehicle (V1),
wherein the speed adjustment step includes:
in a first specific scene (SCN1), where the own vehicle (V) and the preceding vehicle (V1) are traveling on the leftmost lane (L) or a left-turn lane (L) of a general road composed of multiple lanes, or on a single-lane (S) general road, where the turn signal of the preceding vehicle (V1) indicates a left turn and the preceding vehicle (V1) is not decelerating; and
in a second specific scene (SCN2), where the own vehicle (V) and the preceding vehicle (V1) are traveling on the rightmost lane (R) or a right-turn lane (R) of a general road composed of multiple lanes, or on a single-lane (S) general road, where the turn signal of the preceding vehicle (V1) indicates a right turn and the preceding vehicle (V1) is not decelerating,
executing, as the speed adjustment step:
a mild deceleration process that controls the drive device (30) and/or the braking device (40) so that the own vehicle (V) decelerates at a predetermined deceleration rate; or
an acceleration suppression process that controls the drive device (30) and/or the braking device (40) so that the acceleration of the own vehicle (V) is suppressed.

5. A driving assistance program configured to cause a computer provided in the own vehicle (V) to execute:
an information acquisition step of acquiring information related to the own vehicle (V) and information related to a preceding vehicle (V1) traveling ahead of the own vehicle (V1); and
a speed adjustment step of adjusting the speed of the own vehicle by controlling a drive device (30) and/or a braking device (40) of the own vehicle based on the information related to the own vehicle (V) and/or the information related to the preceding vehicle (V1),
wherein the speed adjustment step includes:
in a first specific scene (SCN1), where the own vehicle (V) and the preceding vehicle (V1) are traveling on the leftmost lane (L) or a left-turn lane (L) of a general road composed of multiple lanes, or on a single-lane (S) general road, where the turn signal of the preceding vehicle (V1) indicates a left turn and the preceding vehicle (V1) is not decelerating; and
in a second specific scene (SCN2), where the own vehicle (V) and the preceding vehicle (V1) are traveling on the rightmost lane (R) or a right-turn lane (R) of a general road composed of multiple lanes, or on a single-lane (S) general road, where the turn signal of the preceding vehicle (V1) indicates a right turn and the preceding vehicle (V1) is not decelerating,
executing, as the speed adjustment step:
a mild deceleration process that controls the drive device (30) and/or the braking device (40) so that the own vehicle (V) decelerates at a predetermined deceleration rate; or
an acceleration suppression process that controls the drive device (30) and/or the braking device (40) so that the acceleration of the own vehicle (V) is suppressed.
